(19) Europäisches Patentamt / European Patent Office / Office européen des brevets

(11) **EP 3 427 088 B1**

(12) **FASCICULE DE BREVET EUROPEEN**

(45) Date de publication et mention de la délivrance du brevet:
**26.07.2023 Bulletin 2023/30**

(21) Numéro de dépôt: **17714851.7**

(22) Date de dépôt: **09.03.2017**

(51) Classification Internationale des Brevets (IPC):
*G01V 3/08* *(2006.01)*

(52) Classification Coopérative des Brevets (CPC):
**G01V 3/08**

(86) Numéro de dépôt international:
**PCT/FR2017/050537**

(87) Numéro de publication internationale:
**WO 2017/153690 (14.09.2017 Gazette 2017/37)**

(54) **PROCÉDÉ DE DÉTECTION D'UNE ANOMALIE DANS LE CADRE DE L'UTILISATION D'UN DISPOSITIF DE LOCALISATION MAGNÉTIQUE**

VERFAHREN ZUR DETEKTION EINER ANOMALIE IM ZUSAMMENHANG MIT DER VERWENDUNG EINER MAGNETISCHEN POSITIONIERUNGSVORRICHTUNG

METHOD FOR DETECTING AN ANOMALY IN THE CONTEXT OF USING A MAGNETIC POSITIONING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2016 FR 1652053**

(43) Date de publication de la demande:
**16.01.2019 Bulletin 2019/03**

(73) Titulaires:
• **Commissariat à l'Energie Atomique et aux Energies Alternatives**
**75015 Paris (FR)**
• **Minmaxmedical**
**38700 La Tronche (FR)**

(72) Inventeurs:
• **ALOUI, Saifeddine**
**38600 Fontaine (FR)**
• **BERTRAND, François**
**38180 Seyssins (FR)**
• **CHAVE, Mickaël**
**38120 Saint-Egrève (FR)**
• **LAVALLÉE, Stéphane**
**38410 Saint Martin D'Uriage (FR)**

(74) Mandataire: **INNOV-GROUP**
**310, avenue Berthelot**
**69372 Lyon Cedex 08 (FR)**

(56) Documents cités:
**WO-A2-2010/136316     US-A1- 2015 168 153**

**Description**

**Domaine de l'invention**

L'invention concerne le domaine des dispositifs de localisation magnétique.

**Etat de la technique**

Un dispositif de localisation magnétique comporte généralement un émetteur magnétique et un récepteur magnétique. Le récepteur magnétique permet de mesurer le champ magnétique issu de l'émetteur magnétique en vue de déterminer une orientation et/ou un positionnement de l'émetteur magnétique par rapport au référentiel donné par le récepteur magnétique.

Un tel dispositif de localisation magnétique donne une bonne précision, et peut être utilisé dans des applications de pointe où cette bonne précision est nécessaire.

Cependant, les mesures magnétiques peuvent être perturbées lorsqu'un corps perturbateur entre dans l'environnement du récepteur magnétique. Il résulte d'une telle perturbation que la localisation (orientation et/ou position) perd en précision. En ce sens, il existe un besoin de savoir si oui ou non la localisation d'un objet est perturbée.

Le document FR2946154 propose un système de détection de perturbations utilisant des données relatives à des amplitudes de champ magnétique mesurées pour déterminer la présence ou non d'un perturbateur.

Le document FR2951280 décrit l'utilisation de vecteurs directeurs établis à partir de champs magnétiques mesurés entre des capteurs magnétiques et un émetteur magnétique et la comparaison de ces vecteurs directeurs pour signaler, le cas échéant, la présence d'un perturbateur magnétique.

Toutes les solutions évoquées ci-dessus utilisent les champs magnétiques et la technologie électromagnétique pour détecter une anomalie, et sont donc dépendantes de la modalité magnétique. De telles solutions peuvent être encore améliorées.

Le document US2015/168153 divulgue un procédé de détection d'une anomalie magnétique, dans lequel un dispositif de localisation magnétique comprend un élément magnétique associé à un premier objet, dans lequel le premier objet comporte un capteur de mouvement apte à déterminer une première donnée dépendante de l'inclinaison de l'objet dans un référentiel de base, le procédé comportant les étapes suivantes:

- détermination de la première donnée à partir du capteur de mouvement;
- détermination d'un paramètre d'orientation par le dispositif de localisation magnétique en utilisant l'élément magnétique; et
- utilisation du paramètre d'orientation et de la première donnée pour élaborer un indicateur de présence de l'anomalie.

**Objet de l'invention**

L'invention a pour objet un procédé amélioré de détection d'anomalie. Cette amélioration propose notamment de ne pas dépendre uniquement des données de localisation magnétique pour déterminer la présence ou non d'une anomalie.

On tend vers cet objet grâce à un procédé de détection d'une anomalie associée à un dispositif de localisation selon la revendication 1.

Ladite anomalie peut correspondre à une incapacité du dispositif de localisation magnétique à fournir des données correctes de localisation relative entre l'émetteur de champ magnétique et le récepteur de champ magnétique.

L'invention est aussi relative à un procédé d'utilisation d'un système comprenant un dispositif de localisation magnétique selon la revendication 13.

L'invention est aussi relative à un système selon la revendication 15.

Des caractéristiques particulières de l'invention sont exposées dans les revendications dépendantes.

**Description sommaire des figures**

L'invention sera mieux comprise à la lecture de la description qui va suivre, donnée à titre d'exemple non limitatif et faite en se référant aux dessins sur lesquels :

- la figure 1 illustre l'interaction entre deux objets d'un système comprenant en outre un dispositif de localisation magnétique et au moins un capteur de mouvement,
- la figure 2 illustre différentes étapes d'un procédé de détection d'une anomalie selon un mode d'exécution particulier de l'invention,

- la figure 3 illustre schématiquement un diagramme particulier de mise en oeuvre du procédé de détection de l'anomalie,
- la figure 4 illustre un autre mode de réalisation montrant l'interaction entre trois objets d'un système comprenant en outre un dispositif de localisation magnétique et deux capteurs de mouvement.

Dans ces figures, les mêmes références sont utilisées pour désigner les mêmes éléments.

## Description de modes particuliers de l'invention

Le procédé et le système décrits ci-après utilisent un ou plusieurs capteurs de mouvement aptes à mesurer des données dépendantes de l'inclinaison d'un objet, en particulier mobile, en vue de détecter une anomalie dans le fonctionnement du dispositif de localisation magnétique. Ces capteurs de mouvement sont préférentiellement des accéléromètres.

Dans la présente description, une « inclinaison » est préférentiellement donnée par rapport à un plan, notamment celui de l'horizon lorsque le référentiel de base est le référentiel terrestre.

Un dispositif de localisation magnétique permet usuellement de localiser un objet par rapport à un autre dans un référentiel associé à l'un des objets. Pour cela, le dispositif de localisation magnétique peut comporter au moins un émetteur de champ magnétique et au moins un récepteur de champ magnétique. Le récepteur de champ magnétique est bien entendu configuré pour mesurer le champ magnétique émis par l'émetteur de champ magnétique dans le but de déterminer l'orientation et/ou le positionnement de cet émetteur de champ magnétique par rapport au récepteur de champ magnétique : ceci permet de déterminer le paramètre d'orientation décrit ci-après. Par la suite, le terme « élément magnétique » représente soit un récepteur de champ magnétique, soit un émetteur de champ magnétique. Le ou les émetteurs de champ magnétique et le ou les récepteurs de champ magnétique sont chacun associés à un objet. Un récepteur de champ magnétique est aussi appelé récepteur magnétique, et un émetteur de champ magnétique est aussi appelé émetteur magnétique. Par « localisation d'un objet », on entend qu'il est possible de remonter à la position de l'objet par exemple portant un émetteur magnétique, ainsi qu'à son orientation ou son inclinaison par rapport à un autre objet, à partir de données magnétiques émises par ledit émetteur de champ magnétique et mesurées par un récepteur de champ magnétique porté par ledit autre objet. Dans le cas présent, comme on le verra par la suite, un objet peut être fixe ou mobile. Les dispositifs de localisation magnétique sont bien connus dans la littérature, notamment comme dans le document « Magnetic Position and Orientation Tracking System » de Frederick H. Raab et al. publié dans IEEE Transactions on Aerospace and Electronic Systems VOL. AES-15, No. 5 septembre 1979.

Par ailleurs, dans la présente description, l'utilisation du mot « magnétique » peut être remplacée par le mot « électromagnétique » dans le sens où la source - l'émetteur magnétique - peut être de technologie électromagnétique, et le récepteur magnétique peut aussi être de technologie électromagnétique.

Pour remonter à au moins une partie d'une orientation ou à une inclinaison d'un objet par rapport à un autre, les objets présentent notamment une face avant et une face arrière, un vecteur normal à la face avant pouvant par exemple donner au moins une partie d'orientation ou l'inclinaison de l'objet concerné. Ceci est donné à titre d'exemple dans le sens où l'objet ne possède pas forcément de contraintes sur sa forme. Par exemple, si l'objet est sphérique le vecteur peut être choisi de façon aléatoire. Par orientation, on peut entendre une inclinaison d'un objet par rapport à un autre ou par rapport au référentiel de base.

Pour une localisation correcte d'un objet en utilisant le dispositif de localisation, il est nécessaire de détecter toute anomalie. Une anomalie peut être un mauvais calibrage/réglage du dispositif de localisation, ou encore la présence d'un corps perturbateur du champ magnétique émis par un émetteur de champ magnétique du dispositif de localisation ou reçu par un récepteur de champ magnétique du dispositif de localisation magnétique.

De manière plus générale, une anomalie associée au dispositif de localisation magnétique, aussi appelée anomalie de fonctionnement du dispositif de localisation magnétique, correspond à une incapacité du dispositif de localisation magnétique à fournir des données correctes de localisation. Ces données de localisation sont notamment des données de localisation relative entre l'émetteur de champ magnétique et le récepteur de champ magnétique. En ce sens, lorsqu'une anomalie est présente, elle induit des erreurs dans l'estimation du positionnement d'un objet portant un élément magnétique correspondant, notamment mobile, que peut fournir le dispositif de localisation magnétique.

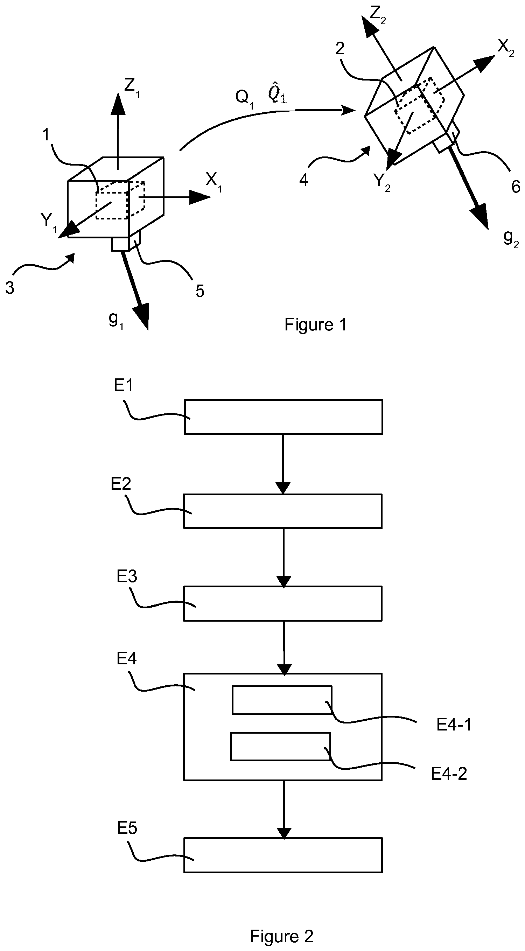

Comme illustré aux figures 1 et 2, le procédé de détection permet de détecter une anomalie associée à un dispositif de localisation magnétique, notamment le dispositif de localisation magnétique comprend au moins un émetteur de champ magnétique et au moins un récepteur de champ magnétique. Ce dispositif de localisation magnétique comprend un premier élément magnétique 1 et un deuxième élément magnétique 2 associés respectivement à un premier objet 3 et à un deuxième objet 4. Autrement dit, le premier objet 3 comporte le premier élément magnétique 1, de préférence formant l'émetteur de champ magnétique du dispositif de localisation magnétique, et le deuxième objet 4 comporte le deuxième élément magnétique 2. Le premier élément magnétique 1 et le deuxième élément magnétique 2 peuvent être chacun choisi parmi : un émetteur de champ magnétique et un récepteur de champ magnétique. En particulier, les premier et deuxième objets 3, 4 appartiennent à un système, et sont notamment distincts. Le premier objet 3 comporte en outre un premier capteur de mouvement 5 apte à déterminer, par exemple par mesure, une première donnée $g_1$ dépendante de l'inclinaison du premier objet 3 dans un référentiel de base, notamment le référentiel terrestre. En particulier, cette première donnée peut représenter le, et plus particulièrement être le ou être fonction du, vecteur de gravitation terrestre $g_1$ vu par le premier capteur de mouvement 5 dans un repère associé au premier objet 3. Le repère associé au premier objet 3 est illustré par les axes $X_1$, $Y_1$, $Z_1$, il s'agit de préférence d'un repère orthogonal. Ce repère associé au premier objet 3 peut notamment être mobile au sein du référentiel de base. On comprend alors que le premier capteur de mouvement 5 peut être un accéléromètre notamment tri-axes apte à déterminer ce vecteur de gravitation terrestre perçu par le premier objet 3 dans son repère $X_1$, $Y_1$, $Z_1$. Autrement dit, la première donnée $g_1$ peut être un ensemble de paramètres mesurés par le premier capteur de mouvement 5 et représentatifs du vecteur de gravitation terrestre vu par ledit premier capteur de mouvement 5 dans le repère associé au premier objet 3 (ce repère étant alors le repère de mesure du premier capteur de mouvement 5). La première donnée est dite dépendante de l'inclinaison du premier objet 3 dans le référentiel de base car en fonction de l'inclinaison du premier objet 3 dans le référentiel de base, la première donnée déterminée dans le repère du premier objet 3 (notamment les paramètres du capteur de mouvement 5) pourra être différente. Un accéléromètre permet de fournir des données qui sont homogènes à une accélération par exemple donnée en m/s$^2$ ou en « g ». Autrement dit, de manière plus générale, la première donnée $g_1$ peut être quantifiée/codifiée dans le repère $X_1$, $Y_1$, $Z_1$ lié au premier objet 3. Plus généralement, le premier capteur de mouvement 5 est un capteur insensible aux champs magnétiques utilisés par le dispositif de localisation magnétique, autrement dit, il donne une ou des mesures indépendantes du dispositif de localisation magnétique. Par ailleurs, le procédé de détection comporte : une étape de détermination E1 de la première donnée $g_1$ à partir dudit premier capteur de mouvement 5 ; une étape de détermination E2 d'une deuxième donnée $g_2$ dépendante de l'inclinaison du deuxième objet 4 dans ledit référentiel de base ; une étape de détermination E3 d'au moins un paramètre d'orientation par le dispositif de localisation magnétique en utilisant les premier et deuxième éléments magnétiques 1, 2 ; une étape d'utilisation E4 dudit au moins un paramètre d'orientation et des première et deuxième données $g_1$, $g_2$ pour élaborer un indicateur de présence de l'anomalie.

Ainsi, le paramètre d'orientation déterminé par le dispositif de localisation magnétique peut décrire l'orientation relative entre l'émetteur de champ magnétique, en particulier formant le premier élément magnétique 1, et le récepteur de champ magnétique du dispositif de localisation magnétique. Ceci permet par exemple de connaitre l'orientation relative entre le premier objet 3, si le premier élément magnétique 1 est l'émetteur de champ magnétique, et le deuxième objet 4 si le deuxième élément magnétique 2 est le récepteur de champ magnétique.

Autrement dit, l'étape de détermination E3 dudit au moins un paramètre d'orientation par le dispositif de localisation magnétique permet, par exemple, de connaitre l'orientation du premier élément magnétique 1, et donc du premier objet 3, relativement au récepteur de champ magnétique qui peut être formé par le deuxième élément magnétique 2 ou être porté par un objet tiers.

L'étape d'utilisation E4 dudit au moins un paramètre d'orientation et des première et deuxième données $g_1$, $g_2$ pour élaborer un indicateur de présence de l'anomalie permet de mettre dans un repère commun (notamment ce repère commun est celui du récepteur de champ magnétique du dispositif de localisation magnétique) les première et deuxième données $g_1$, $g_2$, en particulier déterminées respectivement dans le repère associé au premier objet 3 et dans le repère associé au deuxième objet 4, en utilisant ledit au moins un paramètre d'orientation. Il en résulte qu'en cas de présence de l'anomalie, ledit au moins un paramètre d'orientation déterminé par le dispositif de localisation est erroné : les première et deuxième données placées dans le repère commun via l'utilisation dudit au moins un paramètre d'orientation présenteront une différence telle que cela impliquera la détection de la présence de l'anomalie. Le repère commun peut être un repère orthogonal.

Le premier objet 3 est préférentiellement un objet mobile, c'est-à-dire qu'il est apte à se déplacer au sein du référentiel de base, notamment le référentiel terrestre. En particulier, lorsque le premier capteur de mouvement 5 détermine la première donnée, le premier objet 3 est quasi statique ou en mouvement dans le référentiel de base. En fait, en cas d'utilisation d'accéléromètres, afin de mesurer des données cohérentes, les accélérations propres perpendiculaires au vecteur de gravitation terrestre doivent être faibles, et en général on utilise un filtre passe bas afin de limiter ces effets.

La deuxième donnée $g_2$ peut aussi représenter un, et plus particulièrement être un ou être fonction d'un, vecteur de gravitation terrestre défini dans le repère $X_2$, $Y_2$, $Z_2$, c'est-à-dire le repère lié au deuxième objet 4. Ce repère $X_2$, $Y_2$, $Z_2$ peut être un repère orthogonal. Cette deuxième donnée $g_2$ peut être fixée si le deuxième objet 4 est fixe dans le référentiel de base, ou déterminée par exemple par mesure (notamment si le deuxième objet est fixe ou mobile). En ce sens, le deuxième objet 4 peut comporter un deuxième capteur de mouvement 6 apte à déterminer, par exemple par mesure, la deuxième donnée $g_2$. Ce deuxième capteur de mouvement 6 peut être du même type que le premier capteur de mouvement 5 dans le sens où la deuxième donnée peut être un ensemble de paramètres mesurés par le deuxième capteur de mouvement 6 et représentatifs du vecteur de gravitation terrestre vu par ledit deuxième capteur de mouvement 6 dans le repère associé au deuxième objet 4 (ce repère étant alors le repère de mesure du deuxième capteur de mouvement 6). La deuxième donnée $g_2$ est dite dépendante de l'inclinaison du deuxième objet 4 dans le référentiel de base car en fonction de l'inclinaison du deuxième objet 4 dans le référentiel de base, la deuxième donnée déterminée, (notamment les paramètres du capteur de mouvement 6) pourra être différente. Plus généralement, le deuxième capteur de mouvement 6 est un capteur insensible aux champs magnétiques utilisés par le dispositif de localisation magnétique, autrement dit, il donne une ou des mesures indépendantes du dispositif de localisation magnétique. On comprend que l'étape de détermination E2 peut alors être une étape de détermination de la deuxième donnée $g_2$ à partir dudit deuxième capteur de mouvement 6.

Selon une mise en oeuvre (figure 1) découlant de ce qui a été dit ci-dessus, le deuxième objet 4 est fixe dans ledit référentiel de base, notamment le référentiel terrestre. En ce sens, la détermination de la deuxième donnée $g_2$ peut se faire une fois en installant le deuxième objet 4, par exemple en utilisant un niveau à bulle pour en déduire l'inclinaison du deuxième objet 4, et par conséquence le cas échéant le vecteur de gravitation terrestre $g_2$ associé. Alternativement, et que le deuxième objet 4 soit fixe ou mobile, le deuxième objet 4 peut comporter le deuxième capteur de mouvement 6 apte à déterminer la deuxième donnée $g_2$ dépendante de l'inclinaison du deuxième objet 4 dans ledit référentiel de base, notamment le référentiel terrestre. Ce deuxième capteur de mouvement 6 peut être de type identique au premier capteur de mouvement 5 d'où il résulte que les données mesurées/déterminées par les premier et deuxième capteurs de mouvement 5, 6 sont identiques si les premier et deuxième objets 3, 5 sont placés dans une même localisation (dans ce cas le positionnement et l'orientation sont les mêmes), ou au moins selon une même orientation. En particulier, lorsque le deuxième capteur de mouvement 6 détermine la deuxième donnée, le deuxième objet 4 est quasi statique ou en mouvement dans le référentiel de base.

On comprend du fait que les première et deuxième données $g_1$, $g_2$ soient dépendantes d'inclinaisons du premier objet 3 et du deuxième objet 4 définies selon un même référentiel de base, notamment le référentiel terrestre, que ces données pointent vers une même information (notamment un même point) dans le référentiel de base. En particulier, lorsque ces première et deuxième données $g_1$, $g_2$ sont des vecteurs de gravitation terrestre, ces derniers pointent dans la même direction quelle que soit la position du premier objet 3 par rapport à la position du deuxième objet 4. Dans le cadre de la mise en oeuvre du présent procédé de détection de l'anomalie, les distances de séparation entre les objets (notamment les premier et deuxième objets 3, 4) sont préférentiellement telles que la première donnée représentative du vecteur de gravitation terrestre vu par le premier objet 3 dans le repère associé au premier objet 3 (c'est-à-dire déterminée par le premier capteur de mouvement 5) et que la deuxième donnée représentative du vecteur de gravitation terrestre vu par le deuxième objet 4 dans le repère associé au deuxième objet 4 (c'est-à-dire le cas échéant déterminée par le deuxième capteur de mouvement 6) présentent des directions qui sont considérées comme confondues dans le référentiel de base.

Notamment, le procédé de détection peut comporter une étape de comparaison E5 de l'indicateur de présence de l'anomalie avec un seuil prédéterminé. Si l'indicateur de présence est supérieur au seuil prédéterminé, alors l'anomalie est considérée comme détectée.

On comprend de ce qui a été dit précédemment que la présente invention propose notamment d'utiliser un dispositif inertiel, notamment à base d'un ou plusieurs accéléromètres, en complément du dispositif de localisation magnétique pour vérifier si ce dernier est en anomalie ou non. Le dispositif inertiel n'est pas perturbé par les lignes de champ d'un champ magnétique. Autrement dit, le premier capteur de mouvement 5, et cas échéant le deuxième capteur de mouvement 6, sont distincts du dispositif de localisation magnétique, notamment dans le sens où les données mesurées/déterminées par le premier capteur de mouvement 5, et le cas échéant le deuxième capteur de mouvement 6, ne sont pas perturbées par les champs magnétiques.

On comprend de ce qui a été dit précédemment que les première et deuxième données $g_1$, $g_2$ peuvent être comparées grâce à l'utilisation d'informations d'orientation déterminées à partir du dispositif de localisation. Notamment, selon une mise en oeuvre particulière, il est possible de transposer la première donnée $g_1$, acquise dans le repère du premier objet 3, dans le repère du deuxième objet 4 en fonction dudit au moins un paramètre d'orientation ou inversement. Autrement dit, il est possible d'utiliser le paramètre d'orientation pour placer/réorienter virtuellement le premier objet 3 selon une orientation identique à celle du deuxième objet 4 d'où il résulte que la mesure/détermination effectuée par le premier capteur de mouvement 5 est aussi modifiée selon la réorientation virtuelle, et est appelée première donnée transposée. Dans le cas parfait, sans anomalie du dispositif de localisation magnétique, la première donnée transposée doit être identique à la deuxième donnée, ou sensiblement identique nonobstant une tolérance. Autrement dit, l'étape d'utilisation E4 dudit au moins un paramètre d'orientation et des première et deuxième données $g_1$, $g_2$ comporte : une transposition E4-1 de la première donnée $g_1$, acquise (c'est-à-dire celle déterminée par le premier capteur de mouvement 5) dans un repère $X_1Y_1Z_1$ lié au premier objet 3, dans un repère $X_2Y_2Z_2$ lié au deuxième objet 4 en utilisant ledit au moins un paramètre d'orientation ; et une élaboration E4-2 de l'indicateur de présence de l'anomalie à partir d'une comparaison de la première donnée $g_1$ transposée et de la deuxième donnée $g_2$ ; ou alternativement une transposition E4-1 de la deuxième donnée $g_2$, acquise (c'est-à-dire celle déterminée par le deuxième capteur de mouvement 6) dans un repère lié au deuxième objet 4, dans un repère du premier objet 3 en utilisant ledit au moins un paramètre d'orientation et une élaboration E4-2 de l'indicateur de présence de l'anomalie à partir d'une comparaison de la deuxième donnée transposée et de la première donnée. Plus généralement, l'étape d'utilisation E4 comporte la mise dans un repère commun des première et deuxième données $g_1$, $g_2$ en utilisant ledit au moins un paramètre d'orientation. Après cette mise dans le repère commun, l'indicateur de présence de l'anomalie est un angle formé entre les première et deuxième données $g_1$, $g_2$ mises dans le repère commun.

Plus particulièrement, ledit au moins un paramètre d'orientation peut être un quaternion d'orientation $\hat{Q}_1$ (figure 1) entre le deuxième objet 4 et le premier objet 3 déterminé par le dispositif de localisation magnétique. Un quaternion d'orientation entre deux objets permet de déterminer comment passer de l'orientation du premier objet 3 à celle du deuxième objet 4 et inversement. En particulier, le quaternion d'orientation est un quaternion d'orientation unitaire qui représente des transformations de type rotation et qui peut être inversé. Dans la présente description toute référence à un quaternion d'orientation peut être remplacée par un quaternion unitaire. Un quaternion unitaire est un quaternion qui peut représenter une rotation. Alternativement, ledit au moins un paramètre d'orientation peut être une matrice de rotation permettant le passage de l'orientation du premier objet 3 au deuxième objet 4 et inversement, ou des angles de Euler ou de Cardan. Les quaternions sont préférés car ils ne présentent pas de points confus, et ils sont représentés sur un vecteur de dimension quatre au lieu d'une matrice trois par trois dans le cas de la matrice de rotation. Le quaternion d'orientation $\hat{Q}_1$ peut être déterminé entre un émetteur magnétique et un récepteur magnétique pour connaître l'orientation relative entre ledit émetteur magnétique (donc le premier objet 3 dans l'exemple où ce dernier comporte l'émetteur magnétique) et ledit récepteur magnétique (donc le deuxième objet dans l'exemple où ce dernier comporte le récepteur magnétique). En connaissant le quaternion d'orientation entre le premier objet et un autre objet (le cas échéant ledit autre objet étant le deuxième objet) il est possible d'appliquer le quaternion d'orientation aux valeurs mesurées/déterminées par le premier capteur de mouvement 5 du premier objet 3 de sorte à connaître les valeurs correspondantes ramenées dans le repère du deuxième objet 4. Autrement dit, en reprenant l'exemple de la figure 1, $g_1$ et $g_2$ représentent chacun le vecteur de gravitation terrestre représenté dans le référentiel de base : ils sont colinéaires. Dans le repère lié au premier objet 3, la première donnée $g_1$ est déterminée par le premier capteur de mouvement 5 et dans le repère lié au deuxième objet 4, la deuxième donnée $g_2$ est le cas échéant déterminée par le deuxième capteur de mouvement 6. En prenant $\hat{Q}_1$ le quaternion permettant de passer de la position réelle du premier objet 3 à la position réelle du deuxième objet 4, l'application de ce quaternion à $g_1$ permet de retrouver exactement $g_2$. Dans le cas présent de détection de l'anomalie, le quaternion déterminé est noté $\hat{Q}_1$ car il s'agit d'une estimation/mesure réalisée par le dispositif de localisation magnétique. En appliquant $\hat{Q}_1$ à $g_1$, on obtient $\hat{g}_1$ qui correspond à la première donnée $g_1$ transposée dans le repère du deuxième objet 4. Si $g_2 = \hat{g}_1$ ou si $g_2$ et $\hat{g}_1$ sont proches (c'est à dire que leur comparaison est inférieure à un seuil prédéterminé) alors on considère qu'il n'y a pas d'anomalie et sinon on considère qu'il y a une anomalie et donc une erreur lors de la détermination du quaternion par le dispositif de localisation magnétique. Le raisonnement est aussi valable en faisant passer la deuxième donnée $g_2$ dans le repère de mesure de la première donnée $g_1$.

On comprend de ce qui a été dit ci-dessus que le paramètre d'orientation déterminé par le dispositif de localisation magnétique est tel qu'il permet de transposer l'une des première et deuxième données $g_1$, $g_2$ dans un repère de comparaison, aussi appelé repère commun, au sein duquel les première et deuxième données $g_1$, $g_2$ sont destinées à être comparées. Ce repère de comparaison peut être celui attaché au premier objet 3, ou celui attaché au deuxième objet 4: dans ce cas un seul paramètre d'orientation établi à partir des premier et deuxième éléments magnétiques 1, 2 peut être utilisé. Alternativement, le repère de comparaison peut être celui d'un troisième objet distinct des premier et deuxième objets 3, 4 : dans ce cas deux paramètres d'orientation sont établis par le dispositif de localisation magnétique en utilisant les premier et deuxième éléments magnétiques 1, 2, cette alternative sera décrite plus en détails ci-après.

Plus particulièrement, l'ensemble des quaternions H est une algèbre associative unifère sur le corps des nombres réels R. C'est un ensemble qui ressemble à l'ensemble des nombres complexes, sauf qu'il y a une dimension réelle et trois dimensions imaginaires décrites par i,j,k. avec $i^2 = j^2 = k^2 = ijk = -1$. On appelle ce genre de nombres des « nombres hypercomplexes ». Typiquement, un sous ensemble des quaternions appelé quaternions unitaires peut décrire les rotations dans un espace tridimensionnel. Une rotation d'un angle $\alpha$ autour d'un axe de vecteur directeur $\vec{u}$ est décrite par le quaternion q avec :

$$q = \cos(\alpha) + \sin(\alpha)\, u_x i + \sin(\alpha)\, u_y j + \sin(\alpha)\, u_z k = \begin{bmatrix} \cos(\alpha) \\ \sin(\alpha)\, u_x \\ \sin(\alpha)\, u_y \\ \sin(\alpha)\, u_z \end{bmatrix}.$$

On remarque que seul les quaternions unitaires (i.e. $\|q\| = 1$ représentent des rotations). On remarque aussi que la rotation inverse n'est autre que la rotation d'angle $-\alpha$ autour de l'axe dirigé par le vecteur $\vec{u}$ ou la rotation d'angle $\alpha$ autour de l'axe dirigé par le vecteur $-\vec{u}$. Dans les deux cas, l'inverse est le quaternion :

$$q^{-1} = \begin{bmatrix} \cos(\alpha) \\ -\sin(\alpha)\,u_x \\ -\sin(\alpha)\,u_y \\ -\sin(\alpha)\,u_z \end{bmatrix} = \bar{q} \text{ appelé quaternion conjugué}$$

Selon un exemple de réalisation préféré, le premier élément magnétique 1 du premier objet 3 est un émetteur de champ magnétique, et le deuxième élément magnétique 2 du deuxième objet 4 est un récepteur de champ magnétique. Dans ce cas, ledit au moins un paramètre d'orientation peut être déterminé par le dispositif de localisation magnétique à partir des données mesurées par le récepteur de champ magnétique. On comprend alors qu'ici le paramètre d'orientation permet de connaître l'orientation relative entre l'émetteur de champ magnétique et le récepteur de champ magnétique, et donc entre les premier et deuxième objets 3, 4.

Dans le cas où la première donnée $g_1$ et la deuxième donnée $g_2$ représentent ou sont des vecteurs de gravitation terrestre, l'étape d'élaboration E4-2 de l'indicateur de présence de l'anomalie est telle que ledit indicateur est un angle formé entre la première donnée transposée et la deuxième donnée, ou le cas échéant entre la première donnée et la deuxième donnée transposée. Plus généralement, on dit que ledit indicateur est un angle formé entre la première donnée et la deuxième donnée ramenées dans un même repère, c'est-à-dire le repère commun évoqué ci-dessus.

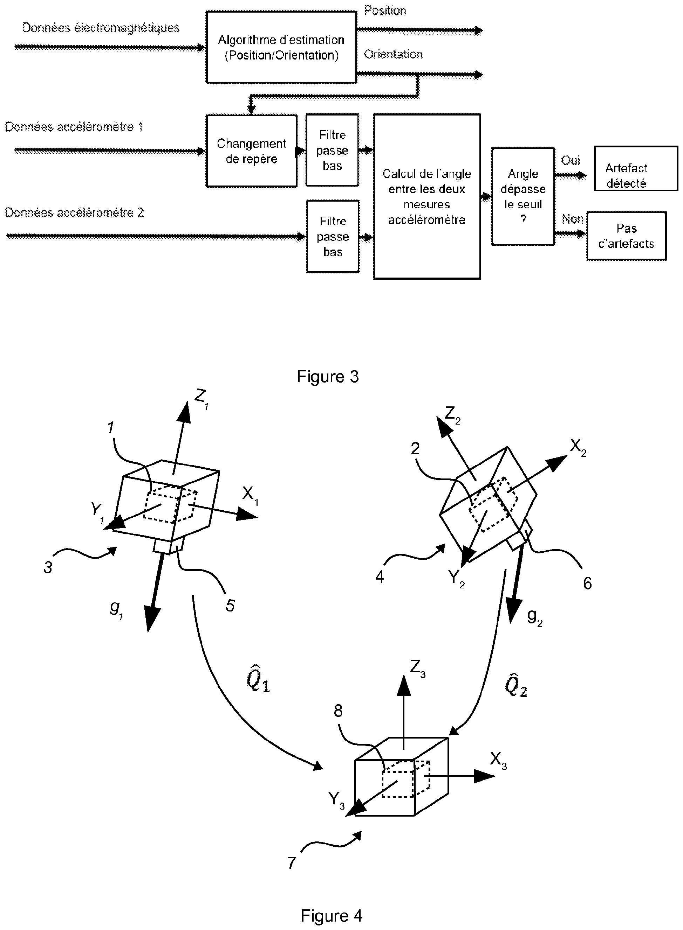

La figure 3 illustre un algorithme particulier associé au système illustré en figure 1 dans lequel le premier objet 3 et/ou le deuxième objet 4 sont mobiles. Les données électromagnétiques issues du dispositif de localisation magnétique et les données inertielles issues des premier et deuxième capteurs de mouvement 5, 6 sont synchronisées de telle sorte qu'à chaque instant d'échantillonnage, le dispositif de localisation magnétique retourne une mesure du champ magnétique entre le premier objet comprenant l'émetteur de champ magnétique et le deuxième objet comprenant le récepteur de champ magnétique. Cette mesure « Données électromagnétiques » est ensuite utilisée pour déterminer la « position » et « l'orientation » du récepteur de champ magnétique (le deuxième objet 4 dans l'exemple) par rapport à l'émetteur de champ magnétique (le premier objet 3 dans l'exemple) en utilisant la fonction « Algorithme d'estimation ». En même temps, les deux accéléromètres (les premier et deuxième capteurs de mouvement 5, 6) donnent chacun une mesure du vecteur de gravitation terrestre dans son repère local associé à l'objet le portant « Données accéléromètre 1 » pour le premier capteur de mouvement 5 et « Données accéléromètre 2 » pour le deuxième capteur de mouvement 6. L'orientation estimée par le dispositif de localisation magnétique est utilisée pour ramener les deux mesures données par les accéléromètres dans le même repère (soit le repère lié à l'émetteur et donc au premier objet 3, soit le repère lié au récepteur et donc au deuxième objet 4) en utilisant la fonction « Changement de repère ». Ces mesures sont filtrées (fonction « Filtre passe-bas ») afin de supprimer l'effet des accélérations propres des accéléromètres par exemple en utilisant un filtre passe-bas. L'angle séparant les deux vecteurs de gravitation terrestre vus dans un même repère est calculé (fonction « Calcul de l'angle entre les deux mesures accéléromètre ») et comparé à un seuil (fonction « Angle dépasse le seuil ? »). Si la valeur de cet angle est supérieure au seuil alors le dispositif de localisation magnétique n'arrive pas à correctement estimer l'orientation ce qui est probablement due à un artefact externe au dispositif de localisation magnétique, ou à une défaillance du dispositif de localisation magnétique, dans le cas contraire le dispositif de localisation est considéré comme opérationnel et fonctionnel : c'est-à-dire qu'il présente des résultats acceptables par rapport aux précisions voulues.

De manière générale, on comprend que l'indicateur de présence de l'anomalie peut être établi en utilisant les première et deuxième données et le paramètre d'orientation déterminés à un même instant temporel ou sur une plage temporelle restreinte représentative d'une configuration du système.

Selon un autre exemple illustré en figure 4, le premier objet 3 et le deuxième objet 4 sont tous les deux mobiles et comportent chacun un émetteur de champ magnétique 1, 2 et un capteur de mouvement 5, 6 apte à déterminer/mesurer une donnée $g_1$, $g_2$ le cas échéant dépendante de l'inclinaison du premier objet 3 dans le référentiel de base ou dépendante de l'inclinaison du deuxième objet 4 dans le référentiel de base. Un troisième objet 7 peut alors comporter un récepteur de champ magnétique 8 du dispositif de localisation magnétique, et est associé au référentiel de base (le troisième objet 7 est notamment fixe dans le référentiel de base). Ainsi, le récepteur de champ magnétique 8 est capable de déterminer un premier quaternion d'orientation $\hat{Q}_1$ entre le premier objet 3 et le troisième objet 7, ainsi qu'un deuxième quaternion $\hat{Q}_2$ d'orientation entre le deuxième objet 4 et le troisième objet 7. Le premier quaternion $\hat{Q}_1$ d'orientation permet alors de ramener par un changement de repère les valeurs mesurées par le premier capteur de mouvement 5 du premier objet 3 dans le repère $X_3Y_3Z_3$ lié au troisième objet 7 et le deuxième quaternion $\hat{Q}_2$ d'orientation permet de ramener par un changement de repère les valeurs mesurées par le deuxième capteur de mouvement 6 du deuxième objet 4 dans le repère lié au troisième objet 7. Dès lors, les première et deuxième données $g_1$, $g_2$ sont comparables dans le repère lié au troisième objet 7, et si elles sont trop différentes on en conclu à une anomalie au niveau du dispositif de localisation. Le repère $X_3Y_3Z_3$ peut être un repère orthogonal. Selon cet exemple, l'étape de détermination E3 permet de déterminer deux paramètres d'orientation en utilisant les premier et deuxième éléments magnétiques 1, 2 (qui sont alors des émetteurs de champ magnétique) : un premier paramètre d'orientation (le premier quaternion) est déterminé en utilisant le récepteur magnétique 8 et le premier élément magnétique 1, et un deuxième paramètre d'orientation (le deuxième quaternion) est déterminé en utilisant le récepteur magnétique 8 et le deuxième élément magnétique 2. En ce sens, l'étape d'utilisation E4 peut utiliser deux paramètres d'orientation et les première et deuxième données pour :

- transposer la première donnée $g_1$, acquise dans le repère $X_1Y_1Z_1$ lié au premier objet 3, dans le repère lié au troisième objet 7,
- transposer la deuxième donnée $g_2$, acquise dans le repère $X_2Y_2Z_2$ lié au deuxième objet 4, dans le repère lié au troisième objet 7,
- élaborer l'indicateur de présence de l'anomalie à partir de la comparaison des première et deuxième données transposées.

Selon encore un autre exemple représentant une alternative à l'exemple donné juste ci-dessus, le troisième objet 7 comporte un récepteur magnétique, le premier objet 3 comporte un émetteur magnétique et le deuxième objet 4 comporte un récepteur magnétique. Dans ce cas, il est possible de détecter une anomalie n'influençant qu'une partie du dispositif de localisation dans le sens où si une anomalie, comme un perturbateur magnétique, est située entre le troisième objet 7 et le premier objet 3 et n'influence pas le champ magnétique entre le premier objet 3 et le deuxième objet 4 il est possible de détecter plus spécifiquement la source du problème en la localisant.

On comprend de ce qui a été dit précédemment que différentes mises en oeuvres sont possibles avec notamment :

- le premier objet 3 est mobile, le premier élément magnétique 1 est un récepteur de champ magnétique, le deuxième objet 4 est par exemple fixe, le deuxième élément magnétique 2 est un émetteur de champ magnétique, dans ce cas le deuxième objet 4 n'a pas besoin de capteur de mouvement. Par ailleurs, dans ce cas, il peut y avoir plusieurs premiers objets identiques et indépendants.
- le premier objet 3 est mobile, le premier élément magnétique 1 est un émetteur de champ magnétique, le deuxième élément magnétique 2 (par exemple fixe) est un récepteur de champ magnétique. Par ailleurs, dans ce cas il peut y avoir plusieurs deuxièmes objets identiques et indépendants.

En fait, il faut juste qu'au moins un des objets soit mobile, les autres pouvant être mobiles ou fixes.

Il a été donné ci-dessus différentes mises en oeuvre, mais on comprend bien que l'homme du métier sera à même d'appliquer les principes de la présente invention pour mettre en oeuvre d'autres réalisations impliquant d'autres récepteurs magnétiques et émetteurs magnétiques placés sur d'autres objets de la pluralité d'objets différents des premier, deuxième, et le cas échéant troisième, objets.

Selon l'exemple particulier où le premier élément magnétique 1 est un émetteur de champ magnétique et le deuxième élément magnétique 2 est un récepteur de champ magnétique, l'angle $\theta$ que l'on cherche à déterminer en tant qu'indicateur de présence de l'anomalie et formé entre la première donnée $g_1$ (ici nommée $\hat{g}_e$) et la deuxième donnée $g_2$ (ici nommée $\hat{g}_r$), notamment au sein du repère commun, est calculé comme suit :

$$\theta = acos\left(\frac{(\mathbf{q}_{e\to r}{}^* \vec{g}_r \mathbf{q}_{e\to r}) \cdot \vec{g}_e}{\|\vec{g}_e\|\|\vec{g}_r\|}\right)$$

où $\mathbf{q}_{e\to r}$ est le quaternion décrivant l'orientation, c'est-à-dire formant ledit au moins un paramètre d'orientation, du récepteur de champ magnétique (et donc du deuxième objet 4) par rapport à l'émetteur de champ magnétique (et donc par rapport au premier objet 3), ce quaternion étant déterminé par le dispositif de localisation magnétique à partir de données mesurées par le récepteur de champ magnétique (ces données mesurées correspondent notamment à déterminer comment le récepteur de champ magnétique perçoit le champ magnétique émis par l'émetteur de champ magnétique, plus particulièrement, le quaternion est obtenu grâce à l'estimation basée sur la mesure du champ magnétique émis par l'émetteur magnétique et mesuré par le récepteur magnétique car il existe un lien entre la valeur de ce champ mesuré et la position/orientation du récepteur par rapport à l'émetteur : donc en cas de présence d'un perturbateur magnétique, le champ magnétique mesuré est erroné et l'estimation d'orientation est faussée), $\vec{g}_e$ est le vecteur de gravitation terrestre déterminé/mesuré par le premier capteur de mouvement 5 placé sur le premier objet 3, $\vec{g}_r$ est le vecteur de gravitation terrestre déterminé/mesuré par le deuxième capteur de mouvement 6 placé sur le deuxième objet 4, $\mathbf{q}_{e\to r}{}^*$ est la valeur conjuguée du quaternion $\mathbf{q}_{e\to r}$, et l'opérateur - est le produit scalaire. Alternativement, lorsque le deuxième capteur de mouvement n'est pas présent car le deuxième objet est fixe par rapport au référentiel de base $\vec{g}_r$ peut être simplement déterminé par lecture d'un paramètre fixe par exemple stocké dans une mémoire. Autrement dit, de manière plus générale il est indifférent que le deuxième objet 4 comporte ou non le deuxième capteur de mouvement 6 dans le sens où $\vec{g_r}$ représente le vecteur de gravitation terrestre déterminé et correspondant à la deuxième donnée $g_2$.

Comme évoqué précédemment, les premier et deuxième capteurs de mouvement 5, 6 peuvent être des accéléromètres. Dans ce cas, le seuil prédéterminé évoqué précédemment peut tenir compte de tout ou partie des éléments suivants : une résolution et un bruit de chacun des accéléromètres ; des accélérations propres de chacun des accéléromètres ; un biais de chacun des accéléromètres ; des défauts de sensibilité de chacun des accéléromètres et de leurs dérives thermiques ; une erreur d'orientation de chacun des accéléromètres par rapport au dispositif de localisation magnétique. Autrement dit, le seuil prédéterminé évoqué ci-avant peut prendre en compte différents phénomènes pouvant induire une différence des mesures d'accéléromètres placés sur deux objets différents qui aurait pour conséquence que la première donnée transposée et la deuxième donnée ne soient pas parfaitement identiques même sans présence d'anomalies, ou plus généralement que les première et deuxième données mises dans le repère commun ne soient pas parfaitement identiques même sans présence d'anomalie.

La résolution de l'accéléromètre ainsi que son bruit sont des facteurs pouvant être déterminants pour la capacité du système à détecter les artefacts. En effet, dans le cas statique, le bruit $\vec{b}$ induit une erreur d'angle $\alpha$ pouvant atteindre :

$$\alpha = atan\left(\frac{\|\vec{b}\|}{\|\vec{g}\|}\right)$$

Où $\alpha$ est l'erreur d'angle pour un bruit de mesure $\vec{b}$ , et $\vec{g}$ représente le vecteur de gravitation terrestre mesuré par ledit accéléromètre. Dans le cas où un accéléromètre est associé au premier objet comportant l'émetteur magnétique, et un autre accéléromètre est associé au deuxième objet comportant le récepteur magnétique, cette erreur due à la résolution et au bruit est multipliée par deux. Cette erreur d'angle fixe déjà la limite de détection du système. Le bruit peut être réduit par un filtrage passe bas des données des accéléromètres comme le montre la figure 3. Il faut appliquer le même filtrage sur les données des accéléromètres des premier et deuxième objets. En particulier, les données sont filtrées après avoir été transposées dans le même repère (celui de l'émetteur ou celui du récepteur), ainsi on utilise un même filtre, ce qui évite d'induire des erreurs supplémentaires.

Concernant la prise en compte des accélérations propres, on note que outre le vecteur de gravitation terrestre $\vec{g}$, l'accéléromètre mesure aussi les accélérations propres dues au mouvement de l'objet (accélération propres notées « $\vec{a}$»). Cette accélération biaise l'estimation de l'angle et vient s'ajouter aux erreurs induites par le bruit pour donner une erreur maximale de :

$$\alpha = atan\left(\frac{\|\vec{a}\| + \|\vec{b}\|}{\|\vec{g}\|}\right)$$

Cette équation juste ci-dessus prend en compte aussi l'accélération $\vec{a}$ et le bruit $\vec{b}$. Le spectre des accélérations propres étant cantonné principalement dans les hautes fréquences, on procédera à un filtrage passe bas pour en atténuer ses effets. Comme pour l'atténuation du bruit propre des accéléromètres, il faut appliquer ce filtrage de manière identique sur les données des accéléromètres des premier et deuxième objets. En particulier, les données sont filtrées après avoir été transposées dans le même repère (celui de l'émetteur ou celui du récepteur), ainsi on utilise un même filtre, ce qui évite d'induire des erreurs supplémentaires.

Le biais crée quant à lui une erreur qui varie en fonction de l'orientation. Elle est maximale quand l'offset est perpendiculaire au vecteur de gravitation terrestre $\vec{g}$. La relation entre l'erreur de l'angle et l'amplitude de l'offset est :

$$\alpha = atan\left(\frac{\|\overrightarrow{Off}\|}{\|\vec{g}\|}\right)$$

Où « $\overrightarrow{Off}$» est le vecteur biais au niveau de l'accéléromètre. Il est obligatoire que l'offset du capteur de mouvement reste stable tout au long de la période d'exécution de l'opération. En général, il est possible d'effectuer une procédure de calibration afin de réduire la valeur de ce biais.

L'erreur d'orientation des accéléromètres par rapport au système électromagnétique peut elle aussi être maitrisée. Elle peut être garantie par construction ou à travers un procédé de calibration. On appelle l'erreur maximale

d'orientation $\varepsilon_{max}$. La quantification de l'erreur maximale dépend de la structure du système considéré comme la qualité de l'assemblage mécanique de ce système et des accéléromètres en eux même. Cette erreur peut, par calibration, être réduite en dessous du degré.

Il résulte de ce qui a été dit ci-dessus que le seuil prédéterminé peut en fait correspondre à une valeur d'angle $\theta_{min}$

$$\theta_{min} = 2\left(atan\left(\frac{\|\vec{a}\| + \|\vec{b}\| + \|\overrightarrow{Off}\|}{\|\vec{g}\|}\right) + \varepsilon_{max}\right)$$

Si l'angle mesuré entre les mesures des deux accéléromètres ramenés dans le même repère dépasse ce seuil, on détecte la présence d'un artefact perturbant le dispositif électromagnétique ou d'un problème de calibration du dispositif de localisation magnétique.

La dérive des paramètres de calibration des accéléromètres par rapport à la température (les défauts de sensibilité évoqués ci-dessus) peut aussi être prise en compte puisqu'elle vient ajouter une erreur supplémentaire à la mesure des accéléromètres. Ici ce qui gêne c'est surtout une évolution non homogène des valeurs de sensibilité des trois axes du capteur (accéléromètre) notés x, y, z et par exemple formant un repère orthogonal. Si la variation de température modifie exactement de la même façon les trois axes, cela ne gêne absolument pas l'estimation d'angle, en revanche si par exemple l'axe x est plus touché que l'axe y, cela crée naturellement des erreurs d'angle qui obligent à augmenter le seuil de détection. En effet, si le gain de chaque axe du capteur ($S_x$, $S_y$ et $S_z$ respectivement les gains des axes x, y et z de l'accéléromètre) est différent des autres on crée une rotation du vecteur de gravitation terrestre. En ce sens, il va exister un angle $\alpha_s$ qui va évoluer en fonction de la température et pour calculer le seuil on va chercher à maximiser cet angle par $\alpha_{s\,MAX}$. Le maximum peut être atteint si le vrai vecteur de gravitation terrestre g est à 45° entre les axes (la projection de ce vecteur sur le plan xy, xz, ou yz est à 45° des axes, xyz représentant le repère de mesure du capteur). Dans le cas en deux dimensions (dans le plan xy), on a une erreur d'angle de :

$$\alpha_{s\,MAX} = \left\|atan\left(\frac{S_x}{S_y}\right) - 45°\right\|$$

Ici si $S_x = S_y$, on aura une erreur nulle (atan(1)=45°), mais si les sensibilités sur x et sur y sont différentes, une erreur apparait. Donc dans le cas trois dimensions, et en tenant compte de toutes les sensibilités, on aura :

$$\alpha_{s\,MAX} = \left\|atan\left(\frac{S_x}{S_y}\right) + atan\left(\frac{S_x}{S_z}\right) + atan\left(\frac{S_y}{S_z}\right) - 135°\right\|$$

En tenant compte de tout ce qui a été dit précédemment, on peut évaluer le seuil prédéterminé $\theta_{min}$ à :

$$\theta_{min} = 2\left(atan\left(\frac{\|\vec{a}\| + \|\vec{b}\| + \|\overrightarrow{Off}\|}{\|\vec{g}\|}\right) + \varepsilon_{max} + \alpha_{s\,MAX}\right)$$

Pour résumer, soit on ajoute une compensation de la dérive (on trouve ceci dans plusieurs accéléromètres), soit on augmente le seuil en tenant compte de la variation maximale que l'on peut atteindre comme décrit ci-dessus. Par exemple, si le rapport entre $S_x$ et $S_y$ est de 1% (un accéléromètre moyen), on obtient une erreur maximum due aux défauts de sensibilité de l'ordre de 0.287°. Dans le cas où tous les rapports sont de 1% on aura une erreur maximum due aux défauts de sensibilité de l'ordre de 0.8637°. Si on a une erreur de 0.1% (un bon accéléromètre bien calibré) on aura une erreur maximum de l'ordre de 0.086°. Il est à noter que pour déterminer l'angle prédéterminé de seuil on tient compte des erreurs maximum pour ne pas tomber dans un cas de faux positif.

Il a été décrit ci-avant le seuil prédéterminé en se basant sur l'utilisation de deux accéléromètres. Bien entendu, le seuil prédéterminé peut aussi être utilisé si un seul capteur de mouvement est utilisé.

Concernant la gestion des accélérations propres, il a été décrit ci-avant comment les prendre en compte et les filtrer. Pour limiter les effets résiduels des accélérations propres, il est possible de n'activer la détection d'une anomalie, notamment lorsque cette dernière est un artefact, que lorsque le mouvement du premier objet mobile, et le cas échéant de tous les objets mobiles du système équipés d'accéléromètres, est inférieur à un seuil de mouvement. On peut ainsi définir sur chaque objet mobile un seuil ε au-delà duquel la détection d'anomalie est inhibée. Si $\|\vec{g}\|$ est la norme du champ gravitationnel mesuré par l'un des accéléromètres, $\vec{g}_0$ la valeur du champ de gravitation, la plage de détection valide pour chaque objet mobile est alors la suivante :

$$\|\vec{g}_0\| - \varepsilon < \|\vec{g}\| < \|\vec{g}_0\| + \varepsilon$$

Autrement dit, le premier capteur de mouvement 5 étant un accéléromètre, il est déterminé une accélération à partir du premier capteur de mouvement 5 d'où il résulte que si l'accélération dépasse un seuil d'accélération maximal, ledit indicateur de présence d'anomalie est considéré comme erroné.

L'invention est aussi relative à un procédé d'utilisation d'un système comprenant le dispositif de localisation magnétique muni du premier élément magnétique 1 et du deuxième élément magnétique 2 associés respectivement au premier objet 3 et au deuxième objet 4 dudit système. Le premier objet 3 comporte alors le premier capteur de mouvement 5 apte à déterminer par exemple par mesure la première donnée $g_1$ dépendante de l'inclinaison du premier objet 3 dans le référentiel de base, notamment le référentiel terrestre. Ce procédé d'utilisation comporte une étape de mise en oeuvre du procédé de détection de l'anomalie tel que décrit précédemment. Ainsi, tout ce qui a été dit ci-avant en combinaison avec le procédé de détection de l'anomalie peut s'appliquer dans le cadre du procédé d'utilisation du système.

Selon une mise en oeuvre du procédé d'utilisation du système, lorsque le premier capteur de mouvement 5 mesure une accélération supérieure à un seuil d'accélération maximal, l'étape de mise en oeuvre du procédé de détection de l'anomalie est inhibée. Ceci permet de mettre en oeuvre le procédé dans un cas quasi-statique définis comme un cas où les capteurs de mouvement (premier et/ou deuxième capteur de mouvement) peuvent déterminer/mesurer la première donnée, notamment le vecteur de gravitation terrestre. En effet, en cas d'accélérations trop importantes, il sera difficile d'extraire une valeur de vecteur de gravitation terrestre à partir d'un accéléromètre tri-axe. Autrement dit, le seuil d'accélération maximal correspond à un seuil au-delà duquel la détermination de la première donnée par le premier capteur de mouvement 5 est impossible.

L'invention est aussi relative à un système comprenant le dispositif de localisation magnétique muni du premier élément magnétique 1 et du deuxième élément magnétique 2. Le premier objet 3 comprend le premier élément magnétique 1, et le deuxième objet 4 comprend le deuxième élément magnétique 2. En outre, le premier objet 3 comporte le capteur de mouvement (le premier capteur) apte à déterminer/mesurer la première donnée dépendante de l'inclinaison du premier objet dans le référentiel de base, notamment le référentiel terrestre. Le système comporte un module configuré pour mettre en oeuvre les étapes du procédé de détection de l'anomalie. Ce module peut comporter les moyens logiciels et matériels de mise en oeuvre dudit procédé de détection de l'anomalie.

Ainsi, il est clair que le système comporte tous les moyens matériels utilisés dans le cadre du procédé ainsi que des éléments configurés pour mettre en oeuvre les différentes étapes du procédé de détection de l'anomalie. En ce sens, le deuxième objet peut comporter le deuxième capteur de mouvement 6, etc.

De manière applicable à tout ce qui a été dit précédemment, le premier élément 1 et le premier capteur de mouvement 5 sont solidaires en mouvement, c'est-à-dire que tout mouvement et toute modification d'orientation appliqué à l'un s'applique aussi à l'autre, on dit alors que le premier capteur de mouvement 5 et le premier élément 1 sont fixes par rapport au premier objet 3 qui les comporte. Il en va de même pour le deuxième objet 4, le deuxième élément magnétique 2 et le cas échéant le deuxième capteur de mouvement 6.

En permettant de déterminer un angle notamment entre la première donnée transposée et la deuxième donnée, l'erreur est quantifiable (exprimée en degré) et donne directement une information sur la précision d'estimation, contrairement aux mesures en micro Tesla selon l'art antérieur utilisant seulement le dispositif de localisation magnétique qui ne donnent pas le lien direct avec la précision.

Par ailleurs, la détection d'une anomalie de type artefact est rapide et permet d'atteindre une résolution théorique voisine de 0.5°.

Comme évoqué précédemment la détection d'une anomalie peut aussi correspondre à une détection de défaillances internes au dispositif de localisation magnétique (dispositif de localisation magnétique mal calibré, induction mutuelle non compensée, etc.).

Par ailleurs, l'utilisation de capteur(s) de mouvement permet de se reposer sur une technologie indépendante de la modalité magnétique, permettant ainsi d'accroître la sûreté d'utilisation du localisateur magnétique.

La présente invention s'applique tout particulièrement dans le domaine médical. Dans un tel domaine, les dispositifs de localisation magnétique peuvent être utilisés pour localiser un outil de chirurgie et doivent garantir une précision submillimétrique importante. En revanche ce genre de dispositif de localisation étant très sensible aux perturbations électromagnétiques, la détection d'une anomalie est primordiale pour éviter des problèmes liés à la localisation.

De manière générale, lors de l'utilisation du dispositif de localisation, notamment au cours du procédé d'utilisation du système, le premier objet est mobile. Autrement dit, l'étape de mise en oeuvre du procédé de détection de l'anomalie peut être mise en oeuvre à différents instants, par exemples à intervalle réguliers. Les étapes E1, E2, E3, E4, et le cas échéant E5 sont notamment mises en oeuvre à un instant correspondant et sont représentatives d'une image de la configuration courante du système audit instant.

Par ailleurs, la présente invention permet en outre de ne disposer que d'un récepteur magnétique au sein du dispositif de localisation magnétique (par exemple formé par le premier élément magnétique ou le deuxième élément magnétique) tout en permettant de détecter une anomalie à partir du ou des capteurs de mouvement. Les récepteurs magnétiques sont souvent de taille plus importante et plus chers que les capteurs de mouvement, il en résulte donc un gain de place et de coûts. Le ou les capteurs de mouvement ajoutés sont de taille permettant d'être ajoutés sans modifier l'encombrement du dispositif de localisation.

Dans la présente description par « orientation relative » ou « localisation relative » entre deux éléments (par exemple un émetteur de champ magnétique et un récepteur de champ magnétique), on entend que cette orientation relative - ou cette localisation relative - peut être celle de l'un de ces deux éléments par rapport à l'autre de ces deux éléments.

## Revendications

1. Procédé de détection d'une anomalie associée à un dispositif de localisation magnétique, ledit dispositif de localisation magnétique comprenant un premier élément magnétique (1) et un deuxième élément magnétique (2) associés respectivement à un premier objet (3) et à un deuxième objet (4), le premier objet (3) comportant un premier capteur de mouvement (5) apte à déterminer une première donnée ($g_1$) dépendante de l'inclinaison du premier objet (3) dans un référentiel de base, notamment le référentiel terrestre, le procédé comportant:

    • une étape de détermination (E1) de la première donnée ($g_1$) à partir dudit premier capteur (5) de mouvement,
    • une étape de détermination (E2) d'une deuxième donnée ($g_2$) dépendante de l'inclinaison du deuxième objet (4) dans ledit référentiel de base,
    • une étape de détermination (E3) d'au moins un paramètre d'orientation par le dispositif de localisation magnétique en utilisant les premier et deuxième éléments magnétiques (1, 2), le paramètre d'orientation étant représentatif d'une orientation du premier objet relativement au deuxième objet,
    • une étape d'utilisation (E4) dudit au moins un paramètre d'orientation et des première et deuxième données ($g_1$, $g_2$) pour élaborer un indicateur de présence de l'anomalie, le procédé comportant en outre une transposition de la première donnée et de la deuxième donnée dans un repère commun, de telle sorte que l'anomalie est déterminée en fonction d'un angle entre lesdites première et deuxième données transposées.

2. Procédé selon la revendication précédente, dans lequel l'étape d'utilisation (E4) dudit au moins un paramètre d'orientation et des première et deuxième données ($g_1$, $g_2$) comporte :

    - une transposition (E4-1) de la première donnée ($g_1$), acquise dans un repère lié au premier objet (3), dans un repère lié au deuxième objet (4) en utilisant ledit au moins un paramètre d'orientation,
    - une élaboration (E4-2) de l'indicateur de présence de l'anomalie à partir d'une comparaison de la première donnée transposée et de la deuxième donnée,

    ou :

    - une transposition (E4-1) de la deuxième donnée ($g_2$), acquise dans un repère lié au deuxième objet (4), dans un repère du premier objet (3) en utilisant ledit au moins un paramètre d'orientation,
    - une élaboration (E4-2) de l'indicateur de présence de l'anomalie à partir d'une comparaison de la deuxième donnée transposée et de la première donnée.

3. Procédé selon l'une quelconque des revendications 1 à 2, dans lequel ledit au moins un paramètre d'orientation est choisi parmi :

    • un quaternion d'orientation entre le deuxième objet (4) et le premier objet (3) déterminé par le dispositif de localisation magnétique,
    • une matrice de rotation permettant le passage de l'orientation du premier objet (3) au deuxième objet (4) et inversement,
· des angles de Euler ou de Cardan.

4. Procédé selon l'une quelconque des revendications précédentes, dans lequel le deuxième objet (4) comporte un deuxième capteur de mouvement (6) apte à déterminer la deuxième donnée.

5. Procédé selon la revendication 4, dans lequel le premier élément magnétique (1) est un émetteur de champ magnétique, le deuxième élément magnétique (2) est un récepteur de champ magnétique, et l'indicateur de présence de l'anomalie est un angle $\theta$ tel que :

$$\theta = acos\left(\frac{(\mathbf{q}_{e\rightarrow r}{}^* \vec{g}_r \mathbf{q}_{e\rightarrow r}) \cdot \vec{g}_e}{\|\vec{g}_e\|\|\vec{g}_r\|}\right)$$

où $\mathbf{q}_{e\rightarrow r}$ est le quaternion décrivant l'orientation du deuxième objet (4) par rapport au premier objet (3), ledit quaternion étant déterminé par le dispositif de localisation magnétique à partir de données mesurées par le récepteur de champ magnétique, $\vec{g}_e$ est un vecteur de gravitation terrestre déterminé par le premier capteur de mouvement (5), $\vec{g}_r$ est un vecteur de gravitation terrestre déterminé par le deuxième capteur de mouvement (6), $\mathbf{q}_{e\rightarrow r}{}^*$ est la valeur conjuguée du quaternion $\mathbf{q}_{e\rightarrow r}$, et l'opérateur - est le produit scalaire.

6. Procédé selon l'une quelconque des revendications 1 à 3, dans lequel le premier élément magnétique (1) est un émetteur de champ magnétique, le deuxième élément magnétique (2) est un récepteur de champ magnétique, et l'indicateur de présence de l'anomalie est un angle $\theta$ tel que :

$$\theta = acos\left(\frac{(\mathbf{q}_{e\rightarrow r}{}^* \vec{g}_r \mathbf{q}_{e\rightarrow r}) \cdot \vec{g}_e}{\|\vec{g}_e\|\|\vec{g}_r\|}\right)$$

où $\mathbf{q}_{e\rightarrow r}$ est le quaternion décrivant l'orientation du deuxième objet (4) par rapport au premier objet (3), ledit quaternion étant déterminé par le dispositif de localisation magnétique à partir de données mesurées par le récepteur de champ magnétique, $\vec{g}_e$ est un vecteur de gravitation terrestre déterminé par le premier capteur de mouvement (5), $\vec{g}_r$ est un vecteur de gravitation terrestre correspondant à la deuxième donnée, $\mathbf{q}_{e\rightarrow r}{}^*$ est la valeur conjuguée du quaternion $\mathbf{q}_{e\rightarrow r}$, et l'opérateur . est le produit scalaire.

7. Procédé selon la revendication 2 et l'une quelconque des revendications précédentes, dans lequel la première donnée ($g_1$) et la deuxième donnée ($g_2$) représentent des vecteurs de gravitation terrestre et dans lequel l'étape d'élaboration (E4-2) de l'indicateur de présence de l'anomalie est telle que ledit indicateur est un angle formé entre la première donnée transposée et la deuxième donnée ou entre la première donnée et la deuxième donnée transposée.

8. Procédé selon l'une quelconque des revendications précédentes, comportant une étape de comparaison (E5) de l'indicateur de présence de l'anomalie avec un seuil prédéterminé.

9. Procédé selon la revendication 4 et l'une quelconque des revendications précédentes, dans lequel les premier et deuxième capteurs de mouvement (5, 6) sont des accéléromètres.

10. Procédé selon la revendication précédente et la revendication 8, dans lequel le seuil prédéterminé tient compte de tout ou partie des éléments suivants :

· une résolution et un bruit de chacun des accéléromètres,
· des accélérations propres de chacun des accéléromètres,
· un biais de chacun des accéléromètres,
· des défauts de sensibilité de chacun des accéléromètres et de leurs dérives thermiques,
· une erreur d'orientation de chacun des accéléromètres par rapport au dispositif de localisation magnétique.

11. Procédé selon l'une quelconque des revendications précédentes, dans lequel le premier élément magnétique (1)

du premier objet (3) est un émetteur de champ magnétique, et le deuxième élément magnétique (2) du deuxième objet (4) est un récepteur de champ magnétique.

**12.** Procédé selon l'une quelconque des revendications précédentes, dans lequel le premier capteur de mouvement (5) est un accéléromètre et il est déterminé une accélération à partir du premier capteur de mouvement (5) d'où il résulte que si l'accélération dépasse un seuil d'accélération maximal, ledit indicateur de présence d'anomalie est considéré comme erroné.

**13.** Procédé d'utilisation d'un système comprenant un dispositif de localisation magnétique muni d'un premier élément magnétique (1) et d'un deuxième élément magnétique (2) associés respectivement à un premier objet (3) et à un deuxième objet (4) dudit système, dans lequel le premier objet (3) comporte un premier capteur de mouvement (5) apte à déterminer une première donnée ($g_1$) dépendante de l'inclinaison du premier objet (3) dans un référentiel de base, et en ce que le procédé d'utilisation comporte la mise en oeuvre du procédé de détection d'une anomalie selon l'une quelconque des revendications précédentes.

**14.** Procédé selon la revendication précédente, dans lequel lorsque le premier capteur de mouvement (5) mesure une accélération supérieure à un seuil d'accélération maximal, la mise en oeuvre du procédé de détection de l'anomalie est inhibée.

**15.** Système comprenant :

- un dispositif de localisation magnétique muni d'un premier élément magnétique (1) et d'un deuxième élément magnétique (2),
- un premier objet (3) comprenant le premier élément magnétique (1),
- un deuxième objet (4) comprenant le deuxième élément magnétique (2),

le premier objet (3) comportant un capteur de mouvement apte à déterminer une première donnée dépendante de l'inclinaison du premier objet (3) dans un référentiel de base, le système comportant de plus un module configuré pour mettre en oeuvre les étapes du procédé de détection de l'anomalie selon l'une quelconque des revendications 1 à 12.

**Patentansprüche**

**1.** Verfahren zur Detektion einer Anomalie in Verbindung mit einer magnetischen Lokalisierungsvorrichtung, wobei die magnetische Lokalisierungsvorrichtung ein erstes Magnetelement (1) und ein zweites Magnetelement (2) umfasst, die einem ersten Objekt (3) bzw. einem zweiten Objekt (4) zugeordnet sind, wobei das erste Objekt (3) einen ersten Bewegungssensor (5) aufweist, der geeignet ist, ein erstes Datenelement ($g_1$) zu bestimmen, das von der Neigung des ersten Objekts (3) in einem Basisbezugssystem, insbesondere dem Erdbezugssystem abhängig ist, wobei das Verfahren Folgendes umfasst

• einen Schritt des Bestimmens (E1) des ersten Datenelements (g1) anhand des ersten Bewegungssensors (5),
• einen Schritt des Bestimmens (E2) eines zweiten Datenelements (g2) das von der Neigung des zweiten Objekts (4) im Basisbezugssystem abhängig ist,
• einen Schritt des Bestimmens (E3) wenigstens eines Orientierungsparameters durch die magnetische Lokalisierungsvorrichtung unter Verwendung des ersten und zweiten Magnetelements (1, 2), wobei der Orientierungsparameter für eine Orientierung des ersten Objekts in Bezug auf das zweite Objekt repräsentativ ist,
• einen Schritt des Verwendens (E4) des wenigstens einen Orientierungsparameters und des ersten und zweiten Datenelements (g1, g2) zur Erstellung eines Indikators für das Vorhandensein der Anomalie, wobei das Verfahren ferner ein Transponieren des ersten Datenelements und des zweiten Datenelements in ein gemeinsames Koordinatensystem umfasst, so dass die Anomalie in Abhängigkeit von einem Winkel zwischen dem transponierten ersten und zweiten Datenelement bestimmt wird.

**2.** Verfahren nach dem vorhergehenden Anspruch, wobei der Schritt des Verwendens (E4) des wenigstens einen Orientierungsparameters und des ersten und zweiten Datenelements ($g_1$, $g_2$) Folgendes aufweist:

- ein Transponieren (E4-1) des ersten Datenelements (g1), das in einem Koordinatensystem erfasst wird, das mit dem ersten Objekt (3) verbunden ist, in ein Koordinatensystem, das mit dem zweiten Objekt (4) verbunden ist, unter Verwendung des wenigstens einen Orientierungsparameters,
- ein Erstellen (E4-2) des Indikators für das Vorhandensein der Anomalie anhand eines Vergleichs des transponierten ersten Datenelements und des zweiten Datenelements,

oder:

- ein Transponieren (E4-1) des zweiten Datenelements (g2), das in einem Koordinatensystem erfasst wird, das mit dem zweiten Objekt (4) verbunden ist, in ein Koordinatensystem des ersten Objekts (3) unter Verwendung des wenigstens einen Orientierungsparameters,
- ein Erstellen (E4-2) des Indikators für das Vorhandensein der Anomalie anhand eines Vergleichs des transponierten zweiten Datenelements und des ersten Datenelements.

3. Verfahren nach einem der Ansprüche 1 bis 2, wobei der wenigstens eine Orientierungsparameter aus Folgendem gewählt ist:

• einem Orientierungsquaternion zwischen dem zweiten Objekt (4) und dem ersten Objekt (3), das von der magnetischen Lokalisierungsvorrichtung bestimmt wird,
• einer Rotationsmatrix, die den Wechsel von der Orientierung des ersten Objekts (3) zum zweiten Objekt (4) und umgekehrt gestattet,
• Euler- oder Kardan-Winkel.

4. Verfahren nach einem der vorhergehenden Ansprüche, wobei das zweite Objekt (4) einen zweiten Bewegungssensor (6) aufweist, der geeignet ist, das zweite Datenelement zu bestimmen.

5. Verfahren nach Anspruch 4, wobei das erste Magnetelement (1) ein Magnetfeldsender ist, das zweite Magnetelement (2) ein Magnetfeldempfänger ist und der Indikator für das Vorhandensein der Anomalie ein Winkel θ ist, so dass:

$$\theta = \operatorname{acos}\left(\frac{(q_{e\rightarrow r}{}^{*}\ \overrightarrow{g_r}\ q_{e\rightarrow r})\cdot\ \overrightarrow{g_e}}{\|\overrightarrow{g_e}\|\|\overrightarrow{g_r}\|}\right)$$

wobei $q_{e\rightarrow r}$ das Quaternion ist, das die Orientierung des zweiten Objekts (4) bezogen auf das erste Objekt (3) beschreibt, wobei das Quaternion durch die magnetische Lokalisierungsvorrichtung anhand von Daten bestimmt wird, die vom Magnetfeldempfänger gemessen werden, $\overrightarrow{g_e}$ ein Erdanziehungsvektor ist, der vom ersten Bewegungssensor (5) bestimmt wird, $\overrightarrow{g_r}$ ein Erdanziehungsvektor ist, der vom zweiten Bewegungssensor (6) bestimmt wird, $q_{e\rightarrow r}{}^{*}$ der konjugierte Wert des Quaternions $q_{e\rightarrow r}$ ist und der Operator · das Skalarprodukt ist.

6. Verfahren nach einem der Ansprüche 1 bis 3, wobei das erste Magnetelement (1) ein Magnetfeldsender ist, das zweite Magnetelement (2) ein Magnetfeldempfänger ist und der Indikator für das Vorhandensein der Anomalie ein Winkel θ ist, so dass:

$$\theta = \operatorname{acos}\left(\frac{(q_{e\rightarrow r}{}^{*}\ \overrightarrow{g_r}\ q_{e\rightarrow r})\cdot\ \overrightarrow{g_e}}{\|\overrightarrow{g_e}\|\|\overrightarrow{g_r}\|}\right)$$

wobei $q_{e\rightarrow r}$ das Quaternion ist, das die Orientierung des zweiten Objekts (4) bezogen auf das erste Objekt (3) beschreibt, wobei das Quaternion durch die magnetische Lokalisierungsvorrichtung anhand von Daten bestimmt wird, die vom Magnetfeldempfänger gemessen werden, $\overrightarrow{g_e}$ ein Erdanziehungsvektor ist, der vom ersten Bewegungssensor (5) bestimmt wird, $\overrightarrow{g_r}$ ein Erdanziehungsvektor ist, der dem zweiten Datenelement entspricht, $q_{e\rightarrow r}{}^{*}$ der konjugierte Wert des Quaternions $q_{e\rightarrow r}$ ist und der Operator · das Skalarprodukt ist.

7. Verfahren nach Anspruch 2 und einem der vorhergehenden Ansprüche, wobei das erste Datenelement ($g_1$) und das zweite Datenelement ($g_2$) Erdanziehungsvektoren darstellen und wobei der Schritt des Erstellens (E4-2) des Indikators für das Vorhandensein der Anomalie so geartet ist, dass der Indikator ein Winkel ist, der zwischen dem transponierten ersten Datenelement und dem zweiten Datenelement oder zwischen dem ersten Datenelement und dem transponierten zweiten Datenelement gebildet ist.

**8.** Verfahren nach einem der vorhergehenden Ansprüche, aufweisend einen Schritt des Vergleichens (E5) des Indikators für das Vorhandensein der Anomalie mit einer vorbestimmten Schwelle.

**9.** Verfahren nach Anspruch 4 und einem der vorhergehenden Ansprüche, wobei der erste und zweite Bewegungssensor (5, 6) Beschleunigungsmesser sind.

**10.** Verfahren nach dem vorhergehenden Anspruch und Anspruch 8, wobei die vorbestimmte Schwelle alle oder einige der folgenden Elemente berücksichtigt:

- eine Auflösung und ein Rauschen jedes der Beschleunigungsmesser,
- eigene Beschleunigungen jedes der Beschleunigungsmesser,
- eine Messabweichung jedes der Beschleunigungsmesser,
- Empfindlichkeitsfehler jedes der Beschleunigungsmesser und ihrer thermischen Driften,
- einen Orientierungsfehler jedes der Beschleunigungsmesser bezogen auf die magnetische Lokalisierungsvorrichtung.

**11.** Verfahren nach einem der vorhergehenden Ansprüche, wobei das erste Magnetelement (1) des ersten Objekts (3) ein Magnetfeldsender und das zweite Magnetelement (2) des zweiten Objekts (4) ein Magnetfeldempfänger ist.

**12.** Verfahren nach einem der vorhergehenden Ansprüche, wobei der erste Bewegungssensor (5) ein Beschleunigungsmesser ist und eine Beschleunigung anhand des ersten Bewegungssensors (5) bestimmt wird, woraus hervorgeht, dass, wenn die Beschleunigung eine maximale Beschleunigungsschwelle überschreitet, der Indikator für das Vorhandensein der Anomalie als fehlerhaft angesehen wird.

**13.** Verfahren zur Verwendung eines Systems, das eine magnetische Lokalisierungsvorrichtung umfasst, die mit einem ersten Magnetelement (1) und einem zweiten Magnetelement (2) versehen ist, die einem ersten Objekt (3) bzw. einem zweiten Objekt (4) des Systems zugeordnet sind, wobei das erste Objekt (3) einen ersten Bewegungssensor (5) aufweist, der geeignet ist, ein erstes Datenelement (g1) zu bestimmen, das von der Neigung des ersten Objekts (3) in einem Basisbezugssystem abhängig ist, und wobei das Verwendungsverfahren die Durchführung des Verfahrens zur Detektion einer Anomalie nach einem der vorhergehenden Ansprüche umfasst.

**14.** Verfahren nach dem vorhergehenden Anspruch, wobei, wenn der erste Bewegungssensor (5) eine Beschleunigung misst, die größer als ein maximale Beschleunigungsschwelle ist, die Durchführung des Verfahrens zur Detektion der Anomalie unterdrückt wird.

**15.** System umfassend:

- eine magnetische Lokalisierungsvorrichtung, die mit einem ersten Magnetelement (1) und einem zweiten Magnetelement (2) versehen ist,
- ein erstes Objekt (3), das das erste Magnetelement (1) umfasst,
- ein zweites Objekt (4), das das zweite Magnetelement (2) umfasst,

wobei das erste Objekt (3) einen Bewegungssensor aufweist, der geeignet ist, ein erstes Datenelement zu bestimmen, das von der Neigung des ersten Objekts (3) in einem Basisbezugssystem abhängig ist, wobei das System außerdem ein Modul aufweist, das dazu ausgebildet ist, die Schritte des Verfahrens zur Detektion der Anomalie nach einem der Ansprüche 1 bis 12 durchzuführen.

## Claims

**1.** Method for detecting an anomaly associated with a magnetic locating device, said magnetic locating device comprising a first magnetic element (1) and a second magnetic element (2) that are associated with a first object (3) and with a second object (4), respectively, the first object (3) comprising a first movement sensor (5) able to determine a first datum ($g_1$) dependent on the inclination of the first object (3) in a basic reference frame, notably the terrestrial reference frame, the method comprising:

- a step (E1) of determining the first datum ($g_1$) from said first movement sensor (5),
- a step (E2) of determining a second datum ($g_2$) dependent on the inclination of the second object (4) in said basic reference frame,
- a step (E3) of determining at least one orientation parameter with the magnetic locating device using the first and second magnetic elements (1, 2), the orientation parameter being representative of an orientation of the first object relative to the second object,
- a step (E4) of using said at least one orientation parameter and the first and second data ($g_1$, $g_2$) to generate an indicator of presence of the anomaly, the method further comprising

a transposition of the first datum and of the second datum to a common coordinate system, such that the anomaly is determined depending on an angle between said transposed first and second data.

2. Method according to the preceding claim, wherein the step (E4) of using said at least one orientation parameter and the first and second data ($g_1$, $g_2$) comprises:

- a transposition (E4-1) of the first datum ($g_1$), acquired in a coordinate system attached to the first object (3), to a coordinate system attached to the second object (4) using said at least one orientation parameter,
- a generation (E4-2) of the indicator of presence of the anomaly from a comparison of the transposed first datum and the second datum,

or:

- a transposition (E4-1) of the second datum ($g_2$), acquired in a coordinate system attached to the second object (4), to a coordinate system of the first object (3) using said at least one orientation parameter,
- a generation (E4-2) of the indicator of presence of the anomaly from a comparison of the transposed second datum and the first datum.

3. Method according to either one of Claims 1 to 2, wherein said at least one orientation parameter is chosen from:

- an orientation quaternion between the second object (4) and the first object (3), determined by the magnetic locating device,
- a rotation matrix allowing passage from the orientation of the first object (3) to the second object (4) and vice versa,
- Euler or Cardan angles.

4. Method according to any one of the preceding claims, wherein the second object (4) comprises a second movement sensor (6) able to determine the second datum.

5. Method according to Claim 4, wherein the first magnetic element (1) is a magnetic-field emitter, the second magnetic element (2) is a magnetic-field receiver, and the indicator of presence of the anomaly is an angle $\theta$ such that:

$$\theta = acos\left(\frac{(\boldsymbol{q}_{e\rightarrow r}{}^*\vec{g}_r\boldsymbol{q}_{e\rightarrow r}) \cdot \vec{g}_e}{\|\vec{g}_e\|\|\vec{g}_r\|}\right)$$

where $q_{e\rightarrow r}$ is the quaternion describing the orientation of the second object (4) with respect to the first object (3), said quaternion being determined by the magnetic locating device from data measured by the magnetic-field receiver, $\vec{g}_e$ is a terrestrial gravity vector determined by the first movement sensor (5), $\vec{g}_r$ is a terrestrial gravity vector determined by the second movement sensor (6), $\boldsymbol{q}_{e\rightarrow r}{}^*$ is the conjugated value of the quaternion $q_{e\rightarrow r}$, and the operator $\cdot$ is the scalar product.

6. Method according to any one of Claims 1 to 3, wherein the first magnetic element (1) is a magnetic-field emitter, the second magnetic element (2) is a magnetic-field receiver, and the indicator of presence of the anomaly is an angle $\theta$ such that:

$$\theta = acos\left(\frac{(\boldsymbol{q}_{e\rightarrow r}{}^*\vec{g}_r\boldsymbol{q}_{e\rightarrow r}) \cdot \vec{g}_e}{\|\vec{g}_e\|\|\vec{g}_r\|}\right)$$

where $\mathbf{q}_{e \to r}$ is the quaternion describing the orientation of the second object (4) with respect to the first object (3), said quaternion being determined by the magnetic locating device from data measured by the magnetic-field receiver, $\vec{g}_e$ is a terrestrial gravity vector determined by the first movement sensor (5), $\vec{g}_r$ is a terrestrial gravity vector corresponding to the second datum, $\mathbf{q}_{e \to r}^*$ is the conjugated value of the quaternion $\mathbf{q}_{e \to r}$, and the operator $\cdot$ is the scalar product.

7. Method according to Claim 2 and any one of the preceding claims, wherein the first datum ($g_1$) and the second datum ($g_2$) represent terrestrial gravity vectors, and wherein the step (E4-2) of generating the indicator of presence of the anomaly is such that said indicator is an angle made between the transposed first datum and the second datum or between the first datum and the transposed second datum.

8. Method according to in any one of the preceding claims, comprising a step (E5) of comparing the indicator of presence of the anomaly with a predetermined threshold.

9. Method according to claim 4 and any one of the preceding claims, wherein the first and second movement sensors (5, 6) are accelerometers.

10. Method according to the preceding claim and claim 8, wherein the predetermined threshold takes into account all or some of the following elements:

   • a resolution and a noise of each of the accelerometers,
   • accelerations specific to each of the accelerometers,
   • a bias of each of the accelerometers,
   • sensitivity defects of each of the accelerometers and their thermal drifts,
   • an orientation error of each of the accelerometers with respect to the magnetic locating device.

11. Method according to any one of the preceding claims, wherein the first magnetic element (1) of the first object (3) is a magnetic-field emitter, and the second magnetic element (2) of the second object (4) is a magnetic-field receiver.

12. Method according to any one of the preceding claims, wherein, the first movement sensor (5) is an accelerometer and an acceleration is determined from the first movement sensor (5), and if this acceleration exceeds a maximum acceleration threshold said indicator of presence of anomaly is considered to be erroneous.

13. Method for using a system comprising a magnetic locating device equipped with a first magnetic element (1) and with a second magnetic element (2) that are associated with a first object (3) and with a second object (4) of said system, respectively, wherein the first object (3) comprises a first movement sensor (5) able to determine a first datum ($g_1$) dependent on the inclination of the first object (3) in a basic reference frame, and wherein the using method comprises implementing the method for detecting an anomaly according to any one of the preceding claims.

14. Method according to the preceding claim, wherein when the first movement sensor (5) measures an acceleration higher than a maximum acceleration threshold, implementation of the anomaly-detecting method is inhibited.

15. System comprising:

   - a magnetic locating device equipped with a first magnetic element (1) and with a second magnetic element (2),
   - a first object (3) comprising the first magnetic element (1),
   - a second object (4) comprising the second magnetic element (2),

the first object (3) comprising a movement sensor able to determine a first datum dependent on the inclination of the first object (3) in a basic reference frame, the system in addition comprising a module configured to implement the steps of the anomaly-detecting method according to any one of Claims 1 to 12.

Figure 1

Figure 2

Figure 3

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2946154
- FR 2951280
- US 2015168153 A

**Littérature non-brevet citée dans la description**

- **FREDERICK H. RAAB et al.** Magnetic Position and Orientation Tracking System. *IEEE Transactions on Aerospace and Electronic Systems,* Septembre 1979, vol. AES-15 (5